# EUROPÄISCHE PATENTSCHRIFT

(11) **EP 2 109 489 B1**
(45) Veröffentlichungstag und Bekanntmachung des Hinweises auf die Patenterteilung: **03.11.2010**
(21) Anmeldenummer: 07702689.6
(22) Anmeldetag: 11.01.2007
(51) Int. Cl.: B01D 33/15

(54) **FILTER FÜR FLÜSSIGKEITEN IN ROHRLEITUNGEN**
FILTER FOR LIQUIDS IN CONDUITS
FILTRE POUR LIQUIDES DANS DES CONDUITES

(43) Veröffentlichungstag der Anmeldung: 21.10.2009
(73) Patentinhaber: TAPROGGE GMBH, D-58300 Wetter (DE)
(72) Erfinder: KELLER, Guido, 58093 Hagen (DE); TROSTMANN, Dirk, 58300 Wetter (DE)
(74) Vertreter: Wenzel & Kalkoff
(86) Internationale Anmeldenummer: PCT/EP2007/000207
(87) Internationale Veröffentlichungsnummer: WO 2008/083713

(56) Entgegenhaltungen:
- EP-A1- 0 268 752
- EP-A1- 0 897 096
- DE-C1- 4 103 514
- DE-U1- 29 510 217
- US-A- 5 217 512

## Beschreibung

Die Erfindung bezieht sich auf Filter für Flüssigkeiten in Rohrleitungen, bestehend aus
- einem rohrförmigen Filtergehäuse,
- einem in dem Filtergehäuse koaxial sowie drehbar angeordneten Filterkorb
- und einem stationären Spülstutzen zum Abführen von auf dem Filterkorb zurückgehaltenen Stoffen,
- der Teile des Filterkorbes nacheinander überdeckt und
- mit Mitteln zum Abführen dieser Stoffe verbunden ist.

Filter dieser Art sind aus der FR 2 609 644 bekannt. Sie dienen vornehmlich zum Reinigen des Kühlwassers für Wärmetauscher, z. B. von Kraftwerken, und werden dort in die Kühlwasserzuleitung eingebaut.

Das bekannte Filter weist einen Filterkorb mit einer sich über den freien Querschnitt des Filtergehäuses erstreckenden Siebfläche auf und arbeitet nach dem sog. Rückspülprinzip. Radiale Trennstege auf der Siebfläche bilden Filterkammern als Teile des Filterkorbes. Der Filterkorb ist an einer konzentrischen Welle befestigt, die in einer durch radiale Speichen gehaltenen Nabe drehbar gelagert ist. Der Filterkorb wird von einem außen an dem Filtergehäuse angeordneten motorischen Drehantrieb angetrieben, dessen Antriebsritzel mit einer Außenverzahnung des Filterkorbes im Eingriff steht. Der Spülstutzen ist zuströmseitig unmittelbar an der offenen Seite der Filterkammern stationär angeordnet und mit einer durch die Wandung des Filtergehäuses geführten Saugleitung verbunden. Wenn über diese Leitung Saugdruck in dem Spülstutzen erzeugt und von dort auf die Filterkammer wirksam wird, die der Spülstutzen gerade überdeckt, werden in dieser Filterkammer auf dem Filterkorb zurückgehaltene Stoffe wie Verschmutzungen oder dergleichen in der Filterkammer gelöst und von dem Spülstutzen durch die Saugleitung hindurch ausgetragen. Die Saugleitung wird periodisch oder je nach Verschmutzungsgrad der Filterkammern wirksam. Durch den Drehantrieb wird der Filterkorb weitergedreht, so daß eine Filterkammer nach der anderen der Saugwirkung des Spülstutzens ausgesetzt und so gesäubert wird.

Ein ähnliches Filter ist aus der FR 2 716 530 bekannt, wo in einem Filtergehäuse ebenfalls ein Filterkorb mit einer Siebfläche und mit einer Unterteilung in Filterkammern koaxial sowie drehbar angeordnet ist. Das Filter wird am Kühlwasserauslaß von Wärmetauschern angeordnet. Damit werden Reinigungskörper, die die Rohre eines Wärmetauschers durchlaufen haben, in den Filterkammern, aufgefangen und von dort durch Anwendung des Rückspülprinzips ausgetragen. Auch hier erfolgt der Drehantrieb des Filterkorbes durch eine Außenverzahnung an dem Filterkorb, die mit einem Ritzel eines von einem außen liegenden elektrischen Motor angetriebenen Getriebes in Eingriff steht. An diesem Filterkorb ist sowohl zuströmseitig als auch abströmseitig jeweils ein Stutzen angeordnet. Beide Stutzen wirken zusammen. In den abströmseitigen Stutzen wird unter Druck von außen Kühlwasser geführt, das die Siebfläche der jeweils von dem Stutzen überdeckten Filterkam-mer durchquert, die dort festgehaltenen Reinigungskörper mitnimmt und über den zuströmseitigen Stutzen und eine sich dort anschließende Abführleitung wieder austritt.

Ein weiteres Filter dieser Art mit einem Rückspülsystem ist aus der EP 0 897 096 B1 bekannt, das sowohl zum Reinigen von Kühlwasser als auch zum Auffangen von Reinigungskörpern aus dem Kühlwasserstrom dienen soll. Hierfür ist ebenfalls ein Filterkorb mit einer Siebfläche koaxial sowie drehbar angetrieben in einem rohrförmigen Filtergehäuse gelagert. Der Drehantrieb besteht ebenfalls aus einer Außenverzahnung an dem Filterkorb, die mit einem in einer Ausbuchtung des Filtergehäuses drehbar gelagerten Antriebsritzel in Eingriff steht, das von einem außerhalb des Filtergehäuses angeordneten Motor angetrieben wird. In dem Ausführungsbeispiel dieser Druckschrift weist das Gehäuse dieses am Kühlwasserauslaß eines Wärmetauschers angeordneten Filters an der Abströmseite des Filterkorbes eine Druckwasserzuleitung und zuströmseitig oberhalb des Filterkorbes eine Abführleitung für Spülwasser auf. Zuströmseitig sind auf der Siebfläche des Filterkorbes auch in diesem Fall Filterkammern durch radiale Trennstege gebildet. Auf der Abströmseite des Filterkorbes schließt sich an die Druckwasserzuleitung ein Druckstutzen an, dem zuströmseitig über den Filterkammern eine segmentförmige Platte zur Bildung eines strömungsfreien Raums in derjenigen Filterkammer gegenüberliegt, die sich gerade zwischen dem Druckstutzen und der Platte befindet. Durch Freigabe der Druckwasserzuleitung strömt Druckwasser durch den über dem Druckstutzen liegenden Abschnitt der Siebfläche und durch die hier angeordnete Filterkammer hindurch, erfaßt die in der Filterkammer aufgefangenen Reinigungskörper und tritt mit diesen über die Abführleitung wieder aus.

Ganz gleich, ob das beschriebene Rückspülprinzip in vor dem Kühlwassereinlaß von Wärmetauschern angeordneten Filtern zum Reinigen von Kühlwasser von Schmutzteilen oder dergleichen oder zum Auffangen und Abführen von Reinigungskörpern am Kühlwasserauslaß eines Wärmetauschers verwendet wird, findet die Kraftübertragung für den Drehantrieb des Filterkorbes stets über einen außen am Umfang des Filterkorbes angebrachten Zahnkranz innerhalb des Filtergehäuses statt. In den Zahnkranz greift ein von einem außenliegenden Motor angetriebenes Ritzel ein. Je nach Bauart muß hierfür entweder die durch das Filtergehäuse hindurchgeführte Antriebswelle des Motors oder aber das in dem Filtergehäuse angeordnete Getriebe abgedichtet werden. Herstellung und Wartung dieses Antriebssystems für den Filterkorb sind mit hohem Aufwand verbunden.

Ein weiterer Nachteil dieses Antriebssystems ist eine mangelnde Betriebssicherheit. Wegen der auf die Siebfläche und den Filterkorb einwirkenden axialen und radialen Belastungen durch die Kühlwasserströmung in Verbindung mit der Drehbewegung sind die Toleranzen der Drehlagerung und des Drehantriebs des Filterkorbes nur sehr unzulänglich zu beherrschen. Deshalb sind der Drehantrieb und die Drehlagerung des Filterkorbes extrem störanfällig. Zudem beansprucht der Motor der bekannten Filter Platz und Schutz außerhalb des Filtergehäuses. Der Aufwand für Betriebskontrollen und für Wartung und Reparaturen von Systemen dieser Art ist entsprechend hoch.

Eine Alternative zu diesem Filteraufbau zeigt EP 0 268 752 B1, wo unter einem feststehenden Filterkorb mit Filterkammern zuströmseitig ein drehbar gelagerter Saugschuh als Spülstutzen umläuft. Der Motor für den Drehantrieb des Saugschuhs kann wahlweise in oder außerhalb des Filtergehäuses angeordnet sein.

Es besteht deshalb die Aufgabe, den Aufbau des Filters zu vereinfachen, die Betriebssicherheit der Antriebskomponenten und der Drehlagerung des Filterkorbes sicher zu beherrschen und die Herstellungs- und Wartungskosten des Filters zu reduzieren.

Diese Aufgabe wird ausgehend von einem Filter der eingangs genannten Art dadurch gelöst, daß
- ein flüssigkeitsdichter Trommelmotor koaxial in dem Filtergehäuse angeordnet ist,
- an dessen Trommel der Filterkorb befestigt ist.

Das erfindungsgemäße Filter gestattet eine Abkehr von dem störanfälligen Drehantrieb des Filterkorbes und von dessen unsicherer Drehlagerung bei bekannten Filtersystemen, wie oben dargelegt ist. Statt dessen werden beide Funktionen, nämlich die Drehlagerung und der Drehantrieb des Filterkorbes, von einer zentral angeordneten neuen Komponente übernommen. Denn erfindungsgemäß ist als Drehantrieb des Filterkorbes ein flüssigkeitsdichter Trommelmotor koaxial in dem Filtergehäuse angeordnet, der außen an seiner Trommel den Filterkorb trägt.

Durch die Vereinfachung des Drehantriebssystems für den Filterkorb ergibt sich eine wesentlich erhöhte Betriebssicherheit des Filters in Verbindung mit einem erheblich reduzierten Wartungsaufwand als Nachfolgenutzen.

Das Rückspülprinzip zum Abführen von auf dem Filterkorb zurückgehaltenen Stoffen aus dem Filter wird bei der einfachen Bauweise des erfindungsgemäßen Filters ebenso beibehalten wie der hierfür stationär angeordnete Spülstutzen. Denn ein stationärer Spülstutzen gestattet eine einfache Bauweise der an den Spülstutzen angeschlossenen und durch das Filtergehäuse nach außen geführten Abführleitung.

Vorzugsweise bestehen die nacheinander von dem Spülstutzen überdeckten Teile des Filterkorbes aus Filterkammern, die durch Stege auf der Filterfläche, zweckmäßig einer Siebfläche bzw. aus Siebsegmenten in den Filterkammern, gebildet sind. Der Spülstutzen soll die Filterkammer vorzugsweise überdecken, damit der Spüldruck möglichst intensiv auf die jeweilige Filterkammer einwirkt.

Beim Rückspülen wird der Filterkorb zum Absaugen oder anderweitigen Ausspülen der in den Filterkammern aufgefangenen Stoffen kontinuierlich, periodisch oder in Abhängigkeit vom Verschmutzungsgrad der Filterkammern gedreht, während der Spülstutzen das Absaugen bzw. Ausspülen der Stoffe aus den Filterkammern übernimmt.

Der von dem Trommelmotor getragene Filterkorb kann auch aus mehreren Filterelementen bestehen, die an der Trommel des Trommelmotors befestigt sind, oder eine Anzahl von Filterelementen wie z.B. Filterkerzen umfassen, die zum Abführen gesammelter Stoffe zweckmäßig nacheinander gespült werden.

Wie im folgenden noch erläutert wird, gestattet der Trommelmotor eine einfache Befestigung seiner Enden an der Innenwandung des Filtergehäuses durch je eine Nabe mit Radialstreben zuström- und abströmseitig im Abstand von dem Filterkorb. Für die Wasserströmung durch das Filter bildet der Trommelmotor kein Hindernis. Denn der Strömungswiderstand des Trommelmotors ist wegen des kleinen Durchmessers der Trommel gering. An der Trommel des Trommelmotors läßt sich der Filterkorb in einfacher Weise befestigen, z. B. mittels eines aufgeschweißten oder mit axialer Sicherung auf die Trommel aufgeschobenen Rohrstutzens, von dem sich Streben zu der ringförmigen Wandung des Filterkorbes erstrecken. Die Streben können als Trennstege zur Bildung der Filterkammern ausgebildet sein und erfüllen so zwei Funktionen.

Der feste Einbau des Spülstutzens gestattet die Verwendung eines kurzen Rohrstutzens für den Weg vom Spülstutzen bis zum einem Absaugventil außen an dem Filtergehäuse für den Austrag der im Filter zurückgehaltenen Stoffe wie Schmutzteilchen.

Der in erfindungsgemäßer Weise für das Filter verwendete Trommelmotor wird, was seinen grundsätzlichen Aufbau anbelangt, bisher für den Antrieb von Rollen für Gurtbandfördersysteme benutzt. Ein Trommelmotor, der sich zur Anpassung an die Anforderungen eines Drehantriebs von Filterkörben eignet, ist z.B. aus der WO 2005/051809 mit dem Titel "A MOTORIZED DRUM ROLLER WITH FIXED ENDS " bekannt. Insofern bedarf die Erfindung nicht der Entwicklung einer vollkommen neuen Motorbauart, sondern es können bekannte Trommelmotoren verwendet werden, die allerdings an den grundsätzlich andersartigen Verwendungszweck als Träger und Drehantrieb eines Filterkorbes in einem Filter für Flüssigkeiten in Rohrleitungen anzupassen sind.

Vorzugsweise sind die Enden des Trommelmotors in Halterungen befestigt, die, wie erwähnt, mittels Radialstreben fest mit dem Filtergehäuse verbunden sind. Zur Aufnahme beider Enden des Trommelmotors eignen sich z.B. einfache Nabenhalterungen bzw. Stutzen. Eine der Radialstreben kann die Kabelzuführung für den Trommelmotor aufnehmen.

Erfindungsgemäß ist der Trommelmotor flüssigkeitsdicht abgedichtet und vorzugsweise medienbeständig ausgeführt. Zweckmäßig sind flüssigkeitsdichte Abdichtungen an den Endabschnitten des Trommelmotors angeordnet. Außerdem soll die Drehrichtung des Trommelmotors jederzeit umkehrbar sein, vor allem wenn ein Hindernis den vollen Umlauf des Filterkorbes blockiert.

Eine andere Anpassung an den erfindungsgemäßen Zweck besteht darin, daß der Trommelmotor zwischen der Trommel und mindestens einem der feststehenden Endabschnitte neben den Drehlagern ein Axiallager aufweist.

Es ist nicht auszuschließen, daß sich im Betrieb des Filters Großteile wie Teile von Baumästen oder dergleichen vom Filterkorb aus der Kühlwasserströmung zurückgehalten werden, die die Drehbewegung des Filterkorbes blockieren, wenn sie zwischen den Filterkorb und den Spülstutzen geraten. Hierfür ist nach einer erfindungsgemäßen Weiterbildung eine Steuerung des Trommelmotors vorgesehen, mit der die Drehbewegung des Trommelmotors und des Filterkorbes umgekehrt wird, wenn die Umlaufbahn des Filterkorbes in einer Drehrichtung durch ein Hindernis blockiert wird. Durch die damit erreichte Reversierbarketi der Drehbewegung des Filterkorbes setzt der Filterkorb seine Drehbewegung in umgekehrter Richtung fort, so daß die Absaugung der Filterkammern durch den Spülstutzen trotz des Hindernisses fortgesetzt wird.

Grundsätzlich kann, wenn das Rückspülprinzip zum Abführen von Ablagerungen nicht angewendet wird, ein vorzugsweise stationäres Räumelement anderer Art zum Einsatz kommen, um Ablagerungen von der Siebfläche des Filterkorbes zu entfernen. Insofern ist die Erfindung nicht auf die Anwendung des Rückspülprinzips bei der Abführung aufgefangener Stoffe beschränkt, sondern besteht grundsätzlich in dem neuen Prinzip, einen flüssigkeitsdicht ausgeführten Trommelmotor koaxial in einem rohrförmigen Filtergehäuse anzuordnen und an der Trommel des Motors eine den freien Querschnitt des Filtergehäuses überdeckende Filterfläche, z.B. eine Siebfläche zu befestigen.

Das erfindungsgemäße Filter ist zwar primär zur Reinigung von Flüssigkeiten wie Kühlwasser von Stoffen wie Schmutzteilchen bestimmt. Es kann hierfür z. B. in der Kühlwasserzuführleitung von Wärmetauschern angeordnet werden. Es kann jedoch mit entsprechender konstruktiver Anpassung ohne weiteres auch zum Auffangen und Abführen von Reinigungskörpern, mit denen die Rohre von Wärmetauschern gereinigt werden, verwendet und hierzu am Auslaß des Kühlwasserstroms von Wärmetauschern angeordnet werden.

Hierfür kann an dem Filterkorb auch abströmseitig ein mit einer durch das Filtergehäuse geführten Druckwasserzuleitung verbundener Stutzen angeordnet sein, dem zuströmseitig ein zweiter Stutzen am Filterkorb gegenüberliegt, der mit einem durch das Filtergehäuse nach außen geführten Auslaß Verbindung hat. Anstelle des zweiten Stutzens können die Filterkammern auch, sofern solche vorgesehen sind, nacheinander direkt mit dem Auslaß in Strömungsverbindung gebracht werden.

Die Erfindung wird nachstehend anhand eines Ausführungsbeispiels mit Bezug auf die Zeichnungen näher erläutert. In den Zeichnungen zeigen:
- Fig. 1: eine perspektivische Seitenansicht eines Filters, wo für die Darstellung ein Teil der Wandung des Filtergehäuses weggelassen ist;
- Fig. 2: eine perspektivische Vorderansicht des Filters und
- Fig. 3: eine Ansicht eines Trommelmotors des Filters von Fig. 1 und 2 als Längsschnitt- darstellung.

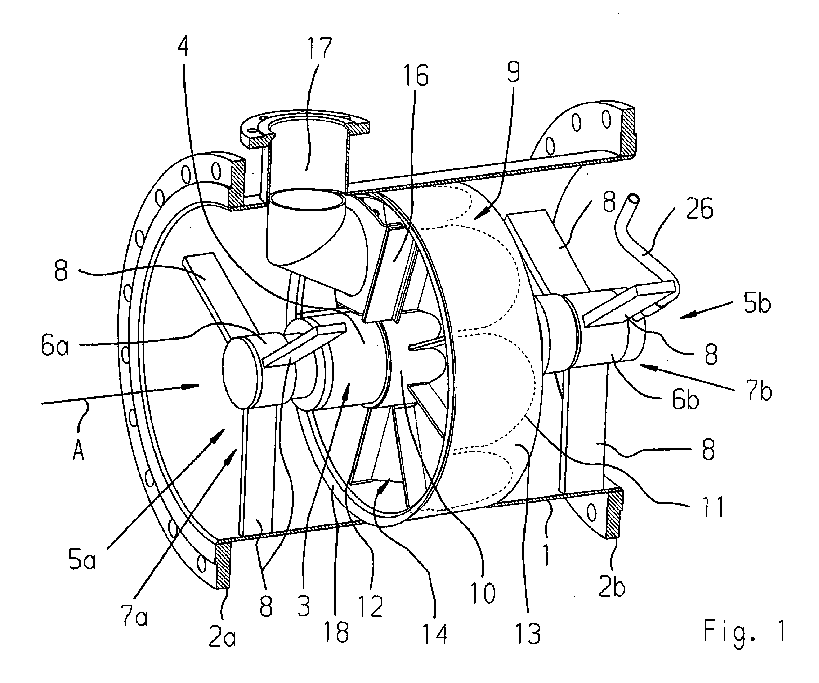

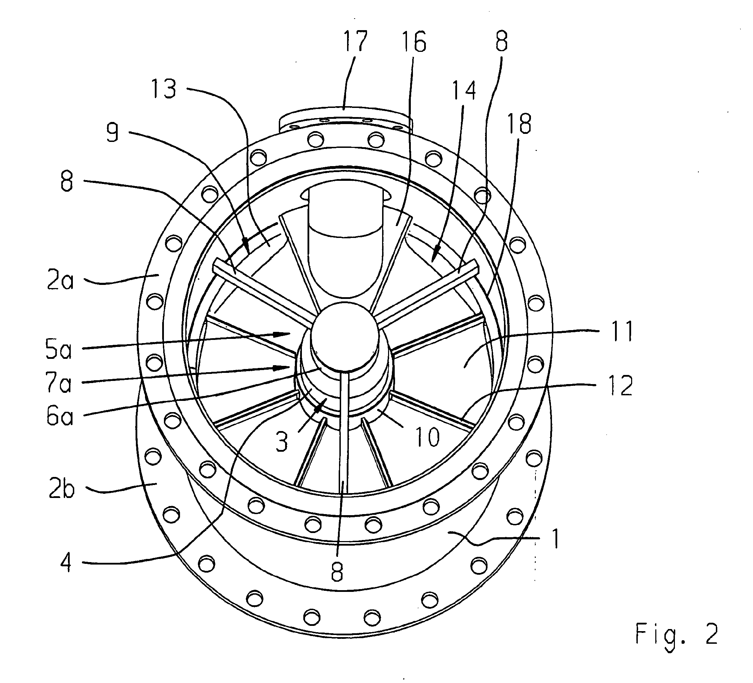

Das in Fig. 1 und 2 dargestellte Filter weist ein Filtergehäuse 1 mit Flanschen 2a, 2b an beiden Enden zum Einbau des Filters in eine Rohrleitung z. B. eine Kühlwasserzuleitung für einen Wärmetauscher auf. Die Strömungsrichtung der das Filter durchströmenden Flüssigkeit, insbesondere Kühlwasser, ist mit einem Pfeil A angegeben.

Soweit auf das Material der Bauteile des Filters nicht gesondert Bezug genommen wird, entspricht es einem Material, das der in der Entwicklung und im Bau von Filtern für Flüssigkeiten bzw. für elektrische Motoren (mit Bezugnahme auf Trommelmotoren) erfahrene Fachmann auswählt.

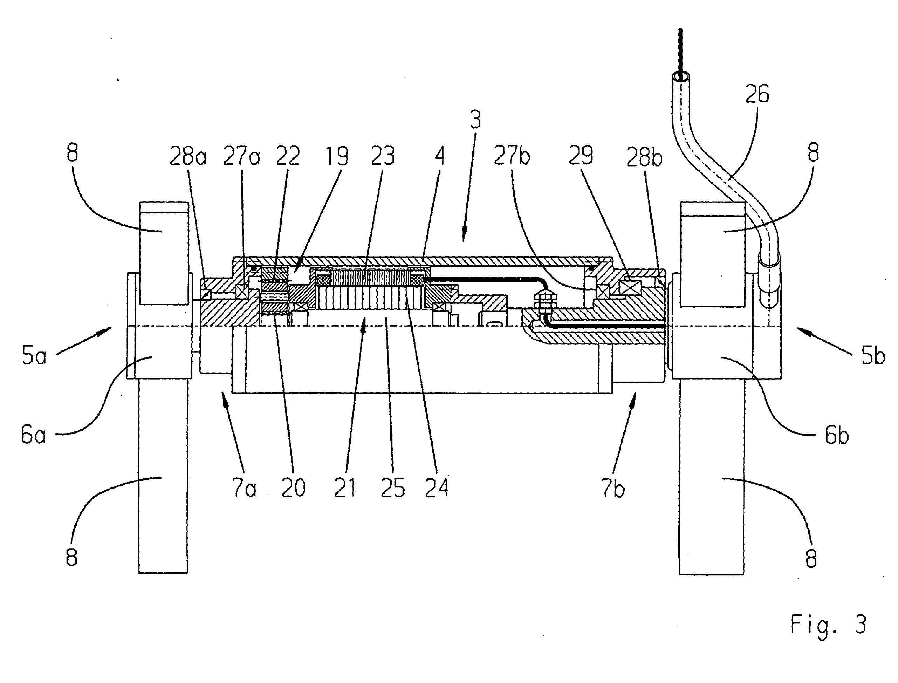

Ein Trommelmotor 3 mit einer drehbaren Trommel 4 ist mittels im Abstand voneinander angeordneten Halterungen 5a, 5b, wie dargestellt, in koaxialer Lage in dem Filtergehäuse 1 angeordnet. Die Halterungen 5a, 5b bestehen jeweils aus einem Rohrstutzen 6a, 6b, der die Enden 7a, 7b des Trommelmotors 3 (vgl. Fig. 3) verdrehsicher aufnimmt. Von jedem Rohrstutzen 6a, 6b gehen Radialstreben 8 aus, die innen an dem Filtergehäuse 1 lösbar befestigt sind.

Am Mantel der Trommel 4 des Trommelmotors 3 ist ein Filterkorb 9 mittels eines Rohrstutzens 10 verdrehsicher sowie gegen axiale Verschiebung gesichert, vorzugsweise lösbar, befestigt.

Auf einer Filterfläche z.B. einer mehrteiligen Siebfläche 11 des Filterkorbes 9 erstrecken sich radiale Trennstege 12 von einer ringförmigen Außenwand 13 des Filterkorbes 9 zu dem Rohrstutzen 10 zur Bildung einer stabilen Struktur des Filterkorbes 9. Zwischen den Trennstegen 12 befinden sich segmentförmige Filterkammern 14 zum Auffangen von Stoffen aus der Flüssigkeitsströmung. Wie Fig. 2 zeigt, besteht die Filterfläche jeder Filterkammer 14 bei diesem Ausführungsbeispiel aus einem gewölbten Siebblech als Siebfläche 11 zwischen den angrenzenden Trennstegen 12.

Auf der Zuströmseite des Filterkorbes 9 ist ein Spülstutzen 16 unmittelbar neben den offenen Seiten der Filterkammern 14 stationär angeordnet, der am Ende eines abgewinkelten, das Filtergehäuse 1 durchquerenden und dort befestigten Rohrstutzens 17, der eine Abführleitung bildet, lösbar befestigt ist. Der Spülstutzen 16 bzw. dessen Öffnung überdeckt die offene Seite der Filterkammern 14, wie es im Prinzip aus Filtersystemen mit Rückspülprinzip bekannt ist. An der Innenwandung des Filtergehäuses 1 ist ein ringförmiger Leitkörper 18 aus Metall oder Kunststoff fest angebracht, der den zuströmseitigen Rand der ringförmigen Außenwand 13 übergreift und bewirkt, daß die Flüssigkeitsströmung durch den Filterkorb 9 hindurchgeführt wird und keine Schmutzteilchen durch den Spalt zwischen der Außenwand 13 und der Innenwandung des Filtergehäuses 1 hindurchlaufen. Es sind auch andere Abdichtungen möglich.

Der Trommelmotor 3 ist in diesem Ausführungsbeispiel seinem grundsätzlichen Aufbau nach z. B. aus der WO 2005/051809 A1 ("MOTORIZED DRUM ROLLER WITH FIXED ENDS") bekannt. Komponenten des Trommelmotors 3 wie ein Untersetzungsgetriebe 19 zwischen dem Ritzel 20 des Elektromotors 21 und der Innenverzahnung 22 der Trommel 4 sowie die Enden 7a, 7b des Trommelmotors 3 sind für die Verwendung des Trommelmotors 3 als Drehantrieb des Filterkorbes 9 ausgelegt. Die Wicklungen des Stators 23 sind an die Kabelzuführung 26 angeschlossen. Ein Rotor 24 weist eine Rotorwelle 25 mit dem Ritzel 20 auf. An das Ritzel 20 ist das Untersetzungsgetriebe 19 angeschlossen, das die Trommel 4 über deren Innenverzahnung 22 drehbar antreibt. Die Enden 7a und 7b der Trommel 4 weisen Drehlager 27a, 27b sowie flüssigkeitsdichte Abdichtungen 28a, 28b auf. An dem abströmseitigen Ende 7b ist zur Aufnahme des Strömungsdrucks ein Axiallager 29 vorgesehen. Alle flüssigkeitsberührten Bauteile des Trommelmotors 3 bestehen z.B. aus seewasserfestem Edelstahl wie 1.4462 oder 1.4439.

Wenn durch Ablagerungen von Stoffen wie Schmutzteilchen in den Filterkammern 14 eine vorgegebene Verschmutzungsgrenze des Filters erreicht wird, beginnt ein Rückspülvorgang. Hierfür wird der Rohrstutzen 17 geöffnet, so daß über den Spülstutzen 16 ein Saugdruck auf diejenige Filterkammer 14 ausgeübt wird, die dem Spülstutzen 16 gegenüberliegt und von diesem druckfrei verschlossen wird. Gleichzeitig wird zum Abführen der Ablagerungen aus der Filterkammer 14 der Trommelmotor 3 aktiviert, der den Filterkorb 9 nun soweit weiter dreht, bis der Spülstutzen 16 über der nächsten Filterkammer 14 steht, damit die Ablagerungen aus dieser Filterkammer 14 ebenfalls durch Rückspülung abgeführt werden. Auf diese Weise werden die Filterkammern 14 nacheinander gereinigt. Die Steuerung des Trommelmotors 3 als Drehantrieb des Filterkorbes 9 hängt von der jeweils gewünschten Betriebsweise ab, die nach bekannten Kriterien bestimmt wird.

## Patentansprüche

1. Filter für Flüssigkeiten in Rohrleitungen, bestehend aus
- einem rohrförmigen Filtergehäuse (1),
- einem in dem Filtergehäuse (1) koaxial sowie drehbar angeordneten Filterkorb (9)
- und einem stationären Spülstutzen (16) zum Abführen von auf dem Filterkorb (9) zurückgehaltenen Stoffen,
- der Teile des Filterkorbes (9) nacheinander überdeckt und
- mit Mitteln zum Abführen dieser Stoffe verbunden ist,
**dadurch gekennzeichnet, daß**
- ein flüssigkeitsdichter Trommelmotor (3) koaxial in dem Filtergehäuse (1) angeordnet ist,
- an dessen Trommel (4) der Filterkorb (9) befestigt ist.

2. Filter nach Anspruch 1, **dadurch gekennzeichnet, daß** das System aus Filterkorb (9) und Spülstutzen (16) wahlweise so ausgebildet ist, daß mit dem Filter als Stoffe vor allem Verschmutzungen oder Reinigungskörper zurückgehalten und abgeführt werden.

3. Filter nach Anspruch 1 oder 2, **dadurch gekennzeichnet, daß** der Filterkorb (9) mittels radialer Streben an der Trommel (4) befestigt ist, die sich zwischen einer ringförmigen Außenwand (13) des Filterkorbes (9) und einem Rohrstutzen (10) erstrecken, der auf dem Mantel der Trommel (4) befestigt ist.

4. Filter nach einem oder mehreren der Ansprüche 1-3, **dadurch gekennzeichnet, daß** die Enden (7a, 7b) des Trommelmotors (3) in Halterungen (5a, 5b) befestigt sind, die mittels Radialstreben (8) fest mit dem Filtergehäuse (1) verbunden sind.

5. Filter nach einem der vorhergehenden Ansprüche, **dadurch gekennzeichnet, daß** der Filterkorb aus mehreren Filterelementen besteht, die an der Trommel (4) des Trommelmotors (3) befestigt sind, oder eine Anzahl von Filterelementen wie Filterkerzen umfasst.

6. Filter nach einem der vorhergehenden Ansprüche, **dadurch gekennzeichnet, daß** sich auf einer Filterfläche des Filterkorbes (9) Trennstege (12) von der ringförmigen Außenwand (13) des Filterkorbes (9) radial nach innen erstrecken und Filterkammern (14) mit Siebflächen (11) bilden und daß von dem Spülstutzen (16) zum Entfernen von aufgefangenen Stoffen aus den Filterkammern (14) über eine als Rohrstutzen (17) ausgebildete Abführleitung eine Saugwirkung auf die dem Spülstutzen (16) jeweils gegenüberliegende Filterkammer (14) ausübbar ist.

7. Filter nach Anspruch 6, **dadurch gekennzeichnet, daß** der Spülstutzen (16) so ausgebildet ist, daß er die Öffnung einer dem Spülstutzen (16) gegenüberliegenden Filterkammer (14) überdeckt.

8. Filter nach einem der Ansprüche 3-7, **dadurch gekennzeichnet, daß** die radialen Streben, mit denen der Filterkorb (9) an der Trommel (4) befestigt ist, als Trennstege (12) zur Bildung der Filterkammer (14) ausgeführt sind.

9. Filter nach einem der vorhergehenden Ansprüche, **dadurch gekennzeichnet, daß** der Trommelmotor (3) flüssigkeitsdichte Abdichtungen (28a, 28b) an seinen Enden (7a, 7b) aufweist.

10. Filter nach einem der vorhergehenden Ansprüche, **dadurch gekennzeichnet, daß** der Trommelmotor (3) zwischen der Trommel (4) und mindestens einem der feststehenden Enden (7a, 7b) ein Axiallager (29) aufweist.

11. Filter nach einem der vorhergehenden Ansprüche, **gekennzeichnet durch** eine Steuerung des Trommelmotors (3), mit der die Drehrichtung des Trommelmotors (3) und des Filterkorbes (9) umgekehrt wird, wenn die Umlaufbahn des Filterkorbes (9) in einer Drehrichtung **durch** ein Hindernis blockiert wird.

## Claims

1. A filter for liquids in conduits, comprising
- a tubular filter housing (1),
- a filter basket (9) coaxially arranged within the filter housing (1) and arranged to be rotatable, and
- a stationary flushing pipe piece (16) for removing substances retained on the filter basket (9),
- sequentially covering portions of the filter basket (9) and
- connected to means for removing these substances,
**characterized in that**
- a liquid-proof drum motor (3) is coaxially arranged within the filter housing (1),
- having the filter basket (9) attached on its drum (4).

2. The filter according to claim 1, **characterized in that** the system comprising the filter basket (9) and the flushing pipe piece (16) is optionally configured in such a way that dirt or cleaning bodies are the substances which are primarily retained and removed by the filter.

3. The filter according to claim 1 or 2, **characterized in that** the filter basket (9) is attached to the drum (4) by means of radial struts extending between an annular outer wall (13) of the filter basket (9) and a tube piece (10), which is attached to the side wall of the drum (4).

4. The filter according to any one or more of claims 1 to 3, **characterized in that** the ends (7a, 7b) of the drum motor (3) are fixed in fixtures (5a, 5b), which are connected with the filter housing (1) by means of radial struts (8) in a fixed manner.

5. The filter according to any one of the preceding claims, **characterized in that** the filter basket consists of a plurality of filter elements fixed to the drum (4) of the drum motor (3), or of a number of filter elements, such as filter candles.

6. The filter according to any one of the preceding claims, **characterized in that** separating webs (12) extend on a filter surface of filter basket (9) from the annular outer wall (13) of filter basket (9) radially toward the inside and form filter chambers (14) with screen surfaces (11), and **in that**, for removing caught substances from the filter chambers (14), a suction can be applied from the flushing pipe piece (16) via a flush-out conduit formed as a pipe piece (17) to each filter chamber (14) currently facing the flushing pipe piece (16).

7. The filter according to claim 6, **characterized in that** the flushing pipe piece (16) is configured in such a way that it covers the opening of a filter chamber (14) facing the flushing pipe piece (16).

8. The filter according to any one of claims 3 to 7, **characterized in that** the radial struts for attaching the filter basket (9) on the drum (4) are configured as separating webs (12) for forming the filter chambers (14).

9. The filter according to any one of the preceding claims, **characterized in that** the drum motor (3) has liquid-proof seals (28a, 28b) at its ends (7a, 7b).

10. The filter according to any one of the preceding claims, **characterized in that** the drum motor (3) has an axial bearing (29) between the drum (4) and at least one of the fixed ends (7a, 7b).

11. The filter according to any one of the preceding claims, **characterized by** a control of the drum motor (3) for reversing the sense of rotation of the drum motor (3) and the filter basket (9) if the rotation of the filter basket (9) is blocked by an obstruction in one sense of rotation.

## Revendications

1. Filtre pour liquides dans des conduites composé :
- d'un boîtier de filtre tubulaire (1),
- d'un panier de filtre (9) placé dans le sens coaxial ainsi que rotatif dans le boîtier de filtre (1)
- et d'une tubulure de rinçage fixe (16) pour évacuer des substances retenues sur le panier de filtre (9)
- qui recouvre des parties du panier de filtre (9) l'une après l'autre et
- qui est reliée à des moyens pour évacuer ces substances,
**caractérisé en ce**
- **qu'**un moteur à tambour étanche au liquide (3) est placé dans le sens coaxial dans le boîtier de filtre (1),
- sur le tambour (4) duquel le panier de filtre (9) est fixé.

2. Filtre selon la revendication 1, **caractérisé en ce que** le système est configuré par le panier de filtre (9) et la tubulure de rinçage (16) au choix de manière telle que surtout des impuretés ou des corps de nettoyage sont retenus avec le filtre comme substances et sont évacués.

3. Filtre selon la revendication 1 ou 2, **caractérisé en ce que** le panier de filtre (9) est fixé au moyen d'entretoises radiales sur le tambour (4) qui s'étendent entre une paroi extérieure annulaire (13) du panier de filtre (9) et une tubulure (10) qui est fixée sur l'enveloppe du tambour (4).

4. Filtre selon l'une ou plusieurs des revendications 1 à 3, **caractérisé en ce que** les extrémités (7a, 7b) du moteur à tambour (3) sont fixées dans des supports (5a, 5b) qui sont reliés au moyen d'entretoises radiales (8) de manière fixe au boîtier du filtre (1).

5. Filtre selon l'une des revendications précédentes, **caractérisé en ce que** le panier de filtre est composé de plusieurs éléments de filtre qui sont fixés au tambour (4) du moteur à tambour (3) ou comprend un certain nombre d'éléments de filtre comme des bougies filtrantes.

6. Filtre selon l'une des revendications précédentes, **caractérisé en ce que** des baguettes de séparation (12) s'étendent radialement vers l'intérieur à partir de la paroi extérieure annulaire (13) du panier de filtre (9) sur une surface de filtre du panier de filtre (9) et forment des compartiments de filtre (14) avec des surfaces de tamisage (11) et qu'un effet d'aspiration peut être exercé sur le compartiment de filtre (14) respectivement opposé à la tubulure de rinçage (16) par la tubulure de rinçage (16) pour éliminer des substances collectées provenant des compartiments de filtre (14) par l'intermédiaire d'une conduite d'évacuation configurée comme une tubulure de tuyau (17).

7. Filtre selon la revendication 6, **caractérisé en ce que** la tubulure de rinçage (16) est configurée telle qu'elle recouvre l'ouverture d'un compartiment de filtre (14) opposé à la tubulure de rinçage (16).

8. Filtre selon l'une des revendications 3 à 7, **caractérisé en ce que** les entretoises radiales avec lesquelles le panier de filtre (9) est fixé au tambour (4) sont conçues comme des baguettes de séparation (12) pour former les compartiments de filtre (14).

9. Filtre selon l'une des revendications précédentes, **caractérisé en ce que** le moteur à tambour (3) présente des étanchéités étanches au liquide (28a, 28b) à ses extrémités (7a, 7b).

10. Filtre selon l'une des revendications précédentes, **caractérisé en ce que** le moteur à tambour (3) présente un palier axial (29) entre le tambour (4) et au moins l'une des extrémités fixes (7a, 7b).

11. Filtre selon l'une des revendications précédentes, **caractérisé par** une commande du moteur à tambour (3) avec laquelle le sens de rotation du moteur à tambour (3) et du panier de filtre (9) est inversé lorsque la trajectoire de circulation du panier de filtre (9) est bloquée dans un sens de rotation par un obstacle.
